# EUROPÄISCHE PATENTSCHRIFT

(11) **EP 2 139 716 B1**
(45) Veröffentlichungstag und Bekanntmachung des Hinweises auf die Patenterteilung: **11.01.2012**
(21) Anmeldenummer: 08716019.8
(22) Anmeldetag: 25.02.2008
(51) Int. Cl.: B60N 2/20, B60N 2/22

(54) **FAHRZEUGSITZ**
VEHICLE SEAT
SIÈGE DE VÉHICULE

(30) Priorität: 26.02.2007 DE 102007009622; 16.03.2007 DE 102007013376; 29.06.2007 DE 102007030332; 16.11.2007 DE 102007055082
(43) Veröffentlichungstag der Anmeldung: 06.01.2010
(73) Patentinhaber: Johnson Controls GmbH, 51399 Burscheid (DE)
(72) Erfinder: SZEGENY, Peter, 51371 Leverkusen (DE); FLUCHT, Stefan, 71126 Gäufelden (DE); HALADUDA, Guido, 42799 Leichlingen (DE)
(74) Vertreter: Wolff, Felix
(86) Internationale Anmeldenummer: PCT/EP2008/001474
(87) Internationale Veröffentlichungsnummer: WO 2008/104348

(56) Entgegenhaltungen:
- EP-A- 1 529 681
- EP-A- 1 632 389
- DE-A1- 3 507 894
- GB-A- 2 359 015

## Beschreibung

Die vorliegende Erfindung betrifft einen Fahrzeugsitz mit einem Sitzteil und einer Rückenlehne, deren Neigung relativ zu dem Sitzteil verstellbar ist und die von einer Gebrauchs- in eine Verstauposition und umgekehrt überführbar ist. Insbesondere betrifft die vorliegende Erfindung den Mittelsitz einer Sitzreihe.

Derartige Fahrzeugsitze sind aus dem Stand der Technik hinlänglich bekannt und werden beispielsweise in der US 6,070,934, der DE 3507894 C2 sowie der DE 60 2004 002 914 T2 beschrieben.

Es war die Aufgabe der vorliegenden Erfindung, die Kinematik dieses Fahrzeugsitzes weiterzuentwickeln und/oder dessen Abmaße in der Verstauposition möglichst zu reduzieren.

Gelöst wird die Aufgabe mit einem Fahrzeugsitz gemäß Anspruch 1.

Der erfindungsgemäße Fahrzeugsitz ist einfach und kostengünstig herzustellen und weist in seiner Verstauposition sehr kompakte Abmaße auf. Die Überführung des erfindungsgemäßen Fahrzeugsitzes von der Gebrauchs- in die Verstauposition und umgekehrt ist durch den Benutzer einfach und mit einem geringen Kraftaufwand durchführbar.

Erfindungsgemäß weist der Fahrzeugsitz ein Sitzteil und eine Rückenlehne auf. Die Rückenlehne ist reversibel von einer Gebrauchsposition, in der ein Fahrzeuginsasse auf dem Fahrzeugsitz Platz nehmen kann und die Rückenlehne im Wesentlichen senkrecht steht, in eine Verstauposition, in der die Rückenlehne im Wesentlichen waagerecht oberhalb der Sitzfläche angeordnet ist, überführbar. In der Gebrauchsposition kann die Neigung der Rückenlehne zur Verbesserung des Komforts des Insassen aber auch zu Easy-Entry-Zwecken verstellt werden. Weiterhin erfindungsgemäß verändert sich beim Überführen die Länge der Rückenlehne. Insbesondere ist die Länge der Rückenlehne in der Gebrauchsposition größer als in der Verstauposition, woraus ein ausreichender Komfort und eine ausreichende Sicherheit und eine kompakte Bauweise in der Verstauposition resultiert. Die Vergrößerung der Länge der Rückenlehne erfolgt vorzugsweise durch ein Verschieben von zumindest einem Teil der Rückenlehne insbesondere entlang einer Führung. Besonders bevorzugt befindet sich diese Führung an dem dem Sitzteil zugewandten Ende der Rückenlehne. Am meisten bevorzugt ist die Verschiebung federbelastet, wobei sich die Feder zwischen der Rückenlehne und der Führung befindet und die Federkraft in der Verstauposition größer ist als in der Gebrauchsposition. Bei der Feder kann es sich beispielsweise um eine Spiral- oder eine Gasdruckfeder handeln. Die Feder kann unterstützend bei der Überführung der Rückenlehne von der Verstau- in die Gebrauchsposition wirken, Vorzugsweise ist ein Bezug, der die Rückenlehne umgibt, so flexibel, dass er sich beim Überführen der Rückenlehne von der Verstau- in die Gebrauchsposition entsprechend dehnt und/oder, dass er ein Reservoir aufweist, das reversibel zur Verfügung steht.

Erfindungsgemäß ist die Rückenlehne an mindestens einem Gelenkhebel drehbar gelagert, der verschieblich an dem Sitzteil angeordnet ist. Vorzugsweise ist die Rückenlehne mit zwei Gelenkhebeln gelagert, die sich rechts und links von der Rückenlehne befinden. Der oder die Gelenkhebel ist/sind insbesondere parallel zu den Seitenholmen des Sitzteils verschiebbar angeordnet. Dafür weist der erfindungsgemäße Fahrzeugsitz besonders bevorzugt Führungen auf, die an den Seitenholmen des Fahrzeugsitzes angeordnet sind und in denen die Gelenkhebel geführt sind. Vorzugsweise ist der Gelenkhebel bananenförmig gestaltet.

Weiterhin bevorzugt weist der erfindungsgemäße Fahrzeugsitz mindestens ein Gelenkstück auf, das mit einem Ende an dem Sitzteil und mit dem anderen Ende an dem Teil jeweils drehbar angeordnet ist. Vorzugsweise weist der Fahrzeugsitz zwei solcher Gelenkstücke auf.

Vorzugsweise ist an dem Gelenkstück ein Endanschlag für die Drehung der Führung relativ zu dem Gelenkstück angeordnet. Bei dieser bevorzugten Ausführungsform kann demnach die Führung und damit die Rückenlehne bereichsweise verschwenkt werden, ohne dass das Gelenkstück mitdreht. Wird dieser Bereich überschritten, drehen die Führung und das Gelenkstück gemeinsam. Der oben genannte Bereich ist insbesondere der Bereich, in dem die Rückenlehne zur Komfortverstellung oder zu Easy-Entry-Zwecken verschwenkt wird.

Vorzugsweise ist zwischen dem Sitzteil und dem Gelenkstück eine Feder angeordnet, die das Gelenkstück bei gewissen Belastungen in seiner Position hält. Erst wenn diese Belastung, insbesondere ein Drehmoment überschritten wird, verdreht sich das Gelenkstück relativ zu dem Sitzteil. Bei der Feder handelt es sich vorzugsweise um eine Schenkelfeder.

In einer weiteren bevorzugten Ausführungsform weist der erfindungsgemäße Fahrzeugsitz mindestens eine Kulissenführung auf. Vorzugsweise sind zwei Kulissenführungen vorhanden, die rechts und links von der Rückenlehne angeordnet sind. Besonders bevorzugt ist die Kulissenführung mit einer Befestigung drehbar an der Rückenlehne befestigt.

Vorzugsweise weist die Kulissenführung eine erste und eine zweite Ausnehmung auf. Vorzugsweise sind beide Ausnehmungen als Langloch ausgeführt. Vorzugsweise ist die zweite Ausnehmung kreisbogenförmig um die Befestigung der Kulissenführung angeordnet. Die Ausnehmungen können ineinander übergehen.

Vorzugsweise ist an dem Gelenkhebel ein Vorsprung, beispielsweise ein Bolzen angeordnet, der mit der Ausnehmung zusammenwirkt und dessen Bewegung durch das Zusammenspiel zwischen dem Vorsprung und der Ausnehmung eingeschränkt wird.

Weiterhin bevorzugt ist an dem Gelenkstück ein Vorsprung, beispielsweise ein Bolzen, angeordnet, der mit der Ausnehmung zusammenwirkt. Die Ausnehmung steuert die Bewegung des Vorsprungs und damit die Bewegung des Gelenkstückes bei der Überführung der Rückenlehne aus der Easy-Entry- in die Verstauposition.

Vorzugsweise überdeckt der Gelenkhebel das Gelenkstück zu jedem Zeitpunkt im Wesentlichen, wodurch das Verletzungsrisiko bei der Bewegung der Rückenlehne zumindest vermindert wird.

Vorzugsweise weist der erfindungsgemäße Fahrzeugsitz ein Hilfsmittel, beispielsweise einen Kraftspeicher wie eine Feder, auf, das die Verstellung der Rückenlehne von der Verstau- in die Gebrauchsposition erleichtert.

Vorzugsweise kann die Rückenlehne sowohl in der Gebrauchs- als auch in der Verstauposition verriegelt werden.

Vorzugsweise ist der erfindungsgemäße Fahrzeugsitz Teil einer Sitzreihe, die Sitzreihe mindestens einen weiteren Sitz aufweist, dessen Rückenlehne vorzugsweise ebenfalls eine Neigungsverstellung aufweist. Besonders bevorzugt entspricht die Drehachse zur Neigungsverstellung der Rückenlehne des weiteren Sitzes der Drehachse der Rückenlehne des erfindungsgemäßen Fahrzeugsitzes. Vorzugsweise ist der erfindungsgemäße Fahrzeugsitz der mittlere Sitz einer Reihe mit drei Sitzen.

Vorzugsweise ist der erfindungsgemäße Fahrzeugsitz zumindest in der Gebrauchsposition mit dem anderen Sitz verriegelbar. Besonders bevorzugt sind insbesondere die Sitzteile der beiden Sitze miteinander verriegelbar.

Vorzugsweise ist der erfindungsgemäße Fahrzeugsitz in seiner Verstauposition unter dem Sitzteil des weiteren Sitzes verstaubar.

Im Folgenden wird die Erfindung anhand der Figuren 1 - 14 erläutert. Diese Erläuterungen sind lediglich beispielhaft und schränken den allgemeinen Erfindungsgedanken nicht ein.
- Figur 1: zeigt eine Ausführungsform des erfindungsgemäßen Fahrzeugsitzes.
- Figur 2: zeigt die Neigungsverstellung des Fahrzeugsitzes gemäß Figur 1.
- Figur 3: zeigt den Anschlag des verschieblichen Teils.
- Figur 4: zeigt die Schenkelfeder an dem Gelenkstück.
- Figur 5: zeigt den erfindungsgemäßen Fahrzeugsitz beim Überführen der Rückenlehne in die Verstauposition.
- Figur 6: zeigt die Überführung der Rückenlehne von der Easy-Entry- in die Verstauposition.
- Figur 7: zeigt den Fahrzeugsitz in der Verstauposition.
- Figur 8: zeigt den Fahrzeugsitz mit der Kulissenführung.
- Figur 9: zeigt die Kulissenführung.
- Figur 10: zeigt das Zusammenspiel der Kulissenführung mit dem Gelenkstück 11.
- Figur 11: zeigt das Zusammenspiel der Kulissenführung mit dem Gelenkhebel 4.
- Figur 12: zeigt ein weiteres Detail des Fahrzeugsitzes gemäß den Figuren 8 - 11.
- Figur 13: zeigt die Verschwenkung der Rückenlehne des Fahrzeugsitzes gemäß den Figuren 8 - 12.
- Figur 14: zeigt die Überführung der Rückenlehne des Fahrzeugsitzes gemäß den Figuren 8 - 12 von der Easy-Entry- in die Verstauposition.

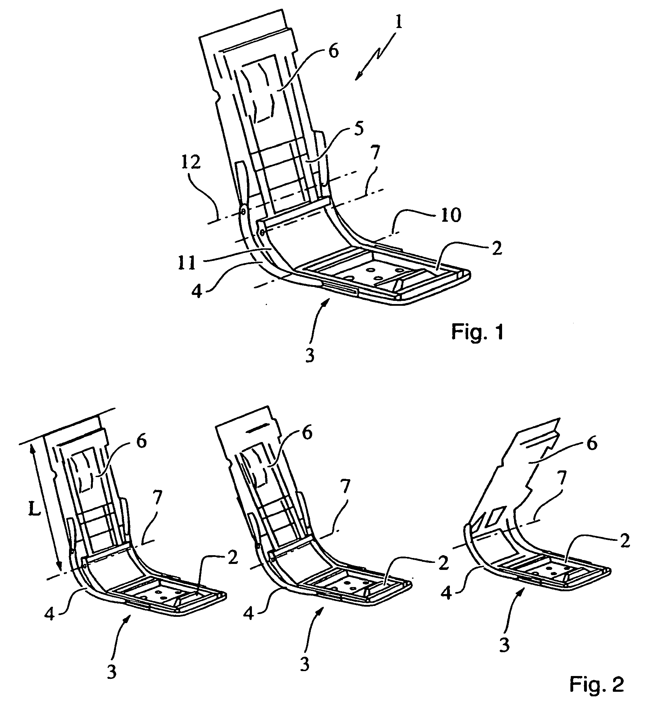

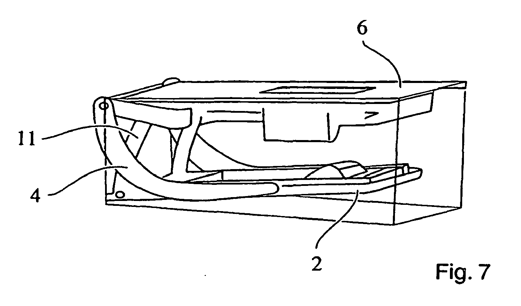

Figur 1 zeigt den erfindungsgemäßen Fahrzeugsitz in seiner Gebrauchsposition, in der ein Insasse auf ihm Platz nehmen kann. Der in Figur 1 dargestellte erfindungsgemäße Fahrzeugsitz 1 weist eine Rückenlehne 6 und ein Sitzteil 2 auf. Die Rückenlehne kann von der Gebrauchs- in eine Verstauposition (Figur 7) überführt werden. In der Gebrauchsposition kann die Neigung der Rückenlehne zur Komfortverstellung und zu Easy-Entry-Zwecken verstellt werden. Die Rückenlehne weist eine Führung 5 auf, entlang derer die Rückenlehne 6 verschieblich gelagert ist und mit der damit ihre Länge veränderbar ist. Die Rückenlehne 6 ist oberhalb der Führung 5 mit zwei Gelenkhebeln 4 drehbar verbunden (Drehachse 12). Wird der erfindungsgemäße Fahrzeugsitz als mittlerer Sitz einer Sitzreihe ausgeführt, entspricht vorzugsweise die Drehachse 12 der Rückenlehne 6 dieses Fahrzeugsitzes 1 der Drehachse der Rückenlehne eines daneben angeordneten seitlichen Fahrzeugsitzes (nicht dargestellt). Die Führung 5 ist mit jeweils einem Ende von zwei Gelenkstücken 11 drehbar verbunden (Drehachse 7). Das andere Ende der Gelenkstücke 11 ist jeweils mit dem Sitzteil verbunden und bildet dort die Drehachse 10 aus. Das Sitzteil 2 weist zwei Gleitschienen 3 auf, in denen die vorderen Enden der beispielsweise bananenförmigen Gelenkhebel 4 verschieblich und drehbar gelagert sind. In Gebrauchsstellung gleiten die vorderen Enden der Gelenkhebel 4 in den Gleitschienen 3 vor und zurück.

In Figur 2 ist das Verschwenken der Rückenlehne in der Gebrauchsposition dargestellt. Die linke Darstellung zeigt die Rücklehne in einer im Wesentlichen senkrechten Stellung. Die mittlere Stellung ist die maximale Neigung nach hinten und die rechte Darstellung zeigt den Fahrzeugsitz in seiner Easy-Entry-Stellung. Bei der Neigungsverstellung gemäß Figur 2 schwenkt die Rückenlehne 6 um die Drehachsen 12 und 7. Während die Gelenkstücke 11 bei all diesen Bewegungen ortsfest bleiben, verschiebt sich die Lage der Gelenkhebel 4 in Längsrichtung entlang der Führungen 3, die rechts u links von dem Sitzteil 2 angeordnet sind. Die Gelenkhebel 4 werden jedoch nicht gedreht.

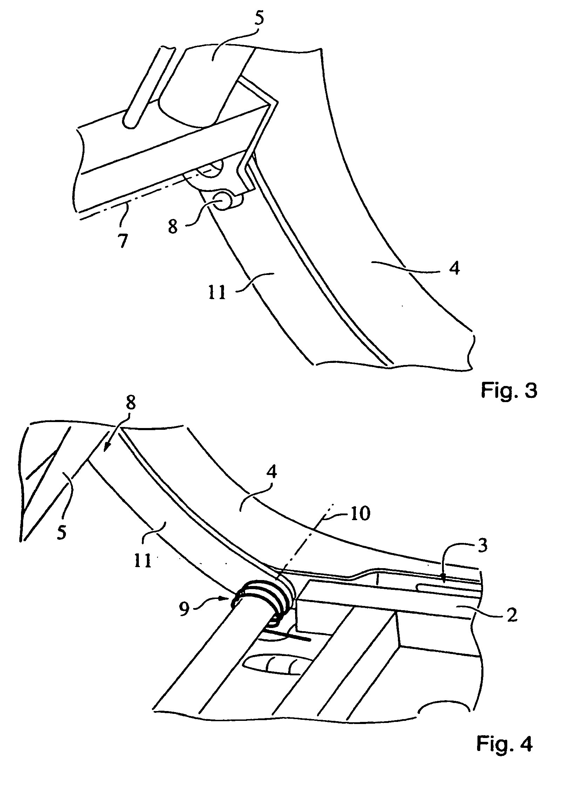

Wie in Figur 3 dargestellt wird beim Erreichen einer vorgegebenen, nach vorne gerichteten Neigung der Rückenlehne 6, beispielsweise der Easy-Entry-Position, die Drehung der Führung 5 und damit der Rückenlehne 6 relativ zu den Gelenkstücken 11 durch einen an diesen angeordneten Endanschlag 8 gestoppt. Die Easy-Entry-Position entspricht im Regelfall einer 35°- bis 40°-Neigung der Rückenlehne bezogen auf die Senkrechte.

Figur 4 kann entnommen werden, dass im Bereich der unteren Drehachse 10 eine Schenkelfeder 9 angeordnet ist, die zwischen dem Gelenkstück 11 und dem Sitzteil 2 eingespannt ist, und dabei das zwischen Sitzteil 2 und Rückenlehne 6 angeordnete Gelenkstück 11 gegen die Reibkräfte in der Drehachse 7 in seiner dargestellten Grundstellung hält.

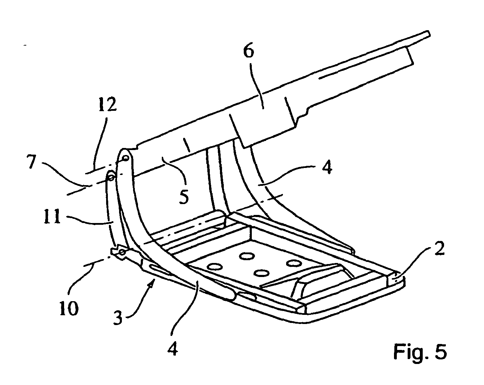

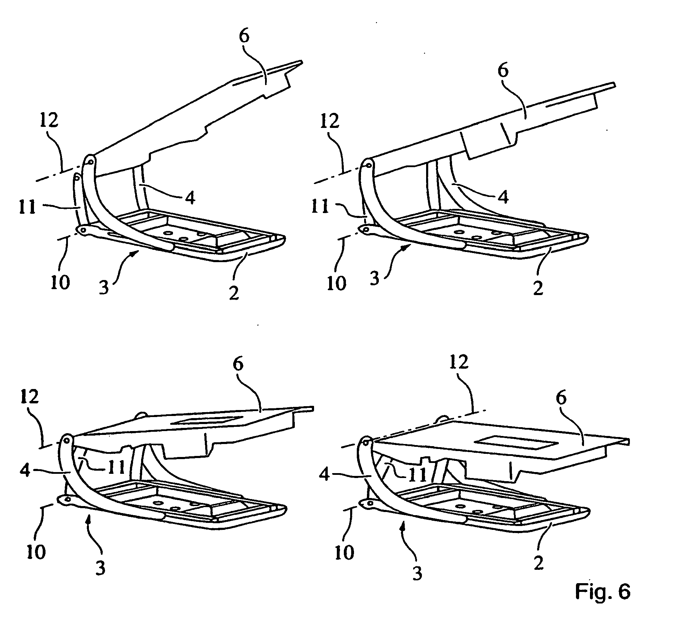

Ein weiteres Verschwenken der Rückenlehne 6 über die Easy-Entry-Position hinaus in die Verstauposition ist in den Figuren 5 und 6 dargestellt. Zunächst schwenkt die Rückenlehne um die Drehachse 7 nach vorne, bis die bogenförmigen Gelenkhebel 4 den vorderen Abschluss der Gleitschienen 3 erreicht haben. Das Gelenkstück 11 wird dabei, bedingt durch den Anschlag 8, um die Achse 10 im Uhrzeigersinn verdreht (Figur 5). Bei einer weiteren Drehung der Rückenlehne 6 im Uhrzeigersinn dreht sich diese im Gelenk zwischen Rückenlehne 6 und Gelenkhebeln 4 (Drehachse 12), wobei das Gelenkstück 11 im unteren Gelenk (Drehachse 10) dreht. Hierdurch wird die Rückenlehne 6 gegen die Kraft einer Gasdruckfeder in die Schiebeführung 5 hineingezogen (Fig. 6). Hierbei verkürzt sich die Rückenlehne zunehmend.

In Figur 7 ist der erfindungsgemäße Fahrzeugsitz in seiner kompakten Verstauposition dargestellt. In dieser Position ist die Rückenlehne 6 kürzer als in der Gebrauchsstellung und ragt nicht über das Sitzteil 2 hinaus. In dieser Position kann der erfindungsgemäße Fahrzeugsitz beispielsweise unter das Sitzteil eines benachbarten Sitzes verstaut werden.

Das Aufrichten der Rückenlehne 6 in die aufrechte Gebrauchslage kann durch eine nicht gezeigte Gasdruckfeder erleichtert werden.

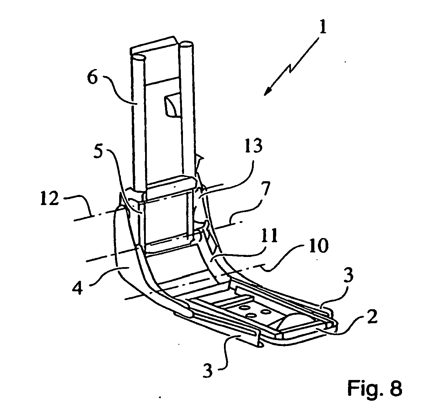

Figur 8 zeigt eine weitere Ausführungsform des erfindungsgemäßen Fahrzeugsitzes. Im vorliegenden Bespiel sind die Gelenkhebel 4 so ausgeführt, dass sie die Gelenkstücke 11 zu jedem Zeitpunkt mindestens teilweise überdecken. Somit ist ausgeschlossen, dass eine Verletzung durch die Scherwirkung zwischen dem Gelenkhebel 4 und dem Gelenkstück 11 durch ein Verschwenken der Rückenlehne 6 auftritt. Desweiteren weist der erfindungsgemäße Fahrzeugsitz zwei Kulissenführungen 13 auf, die jeweils rechts und links von der Rückenlehne angeordnet sind.

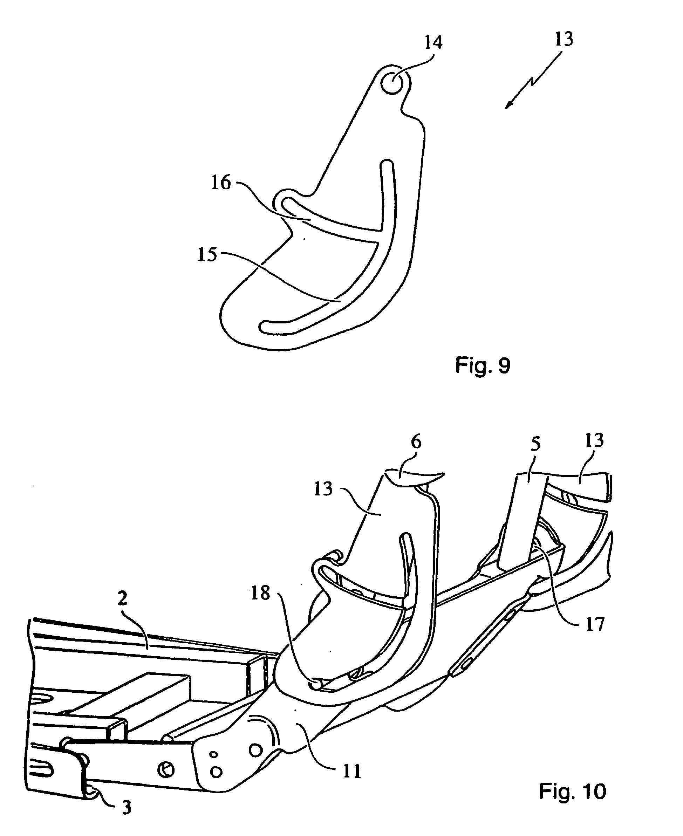

Diese Kulissenführung ist im Detail in Figur 9 dargestellt und weist eine Ausnehmung 14 auf, mit der die Kulisse an der Rückenlehne im Bereich der Drehachse 12 angebracht werden kann. Desweiteren sind in der Kulissenführung 13 eine erste Ausnehmung 15 und eine zweite Ausnehmung 16 vorgesehen, die jeweils als Langloch ausgeführt sind. Das Langloch 16 hat die Form eines Kreisbogensegments, dessen Mittelpunkt der Mittelpunkt der Ausnehmung 14 ist.

Wie in Figur 10 dargestellt, ist an dem Gelenkstück 11 ein Bolzen 18 angeordnet, der in das Langloch 15 eingreift und sich entlang dieses Langloches bewegt. Desweiteren ist in dieser Darstellung die Befestigung 17 der Führung 5 an den Gelenkstücken 11 dargestellt.

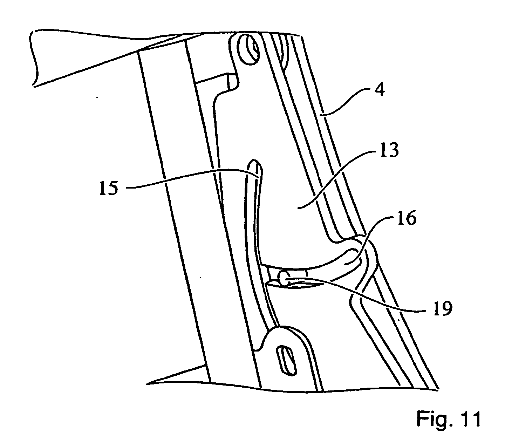

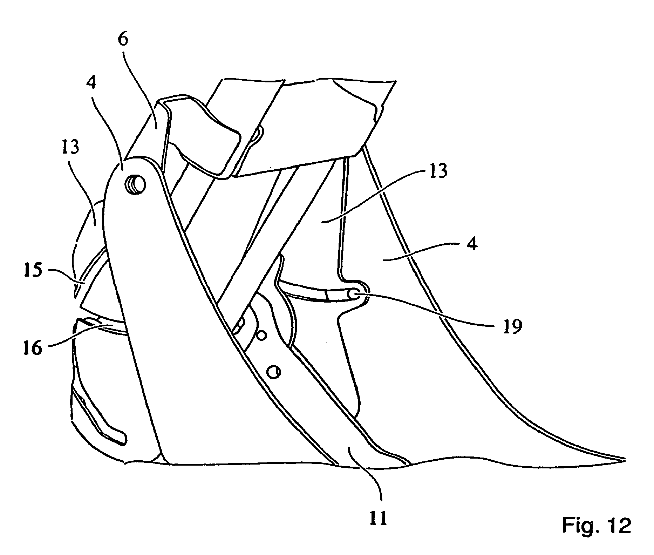

Figuren 11 und 12 zeigen, dass in das Langloch 16 ein Bolzen 19 eingreift, der an dem Gelenkhebel 4 angeordnet ist. Mit dem Bolzen 19 im Zusammenspiel mit dem Langloch 16 wird die Bewegung des Gelenkhebels 4 relativ zu der Kulisse 13 begrenzt.

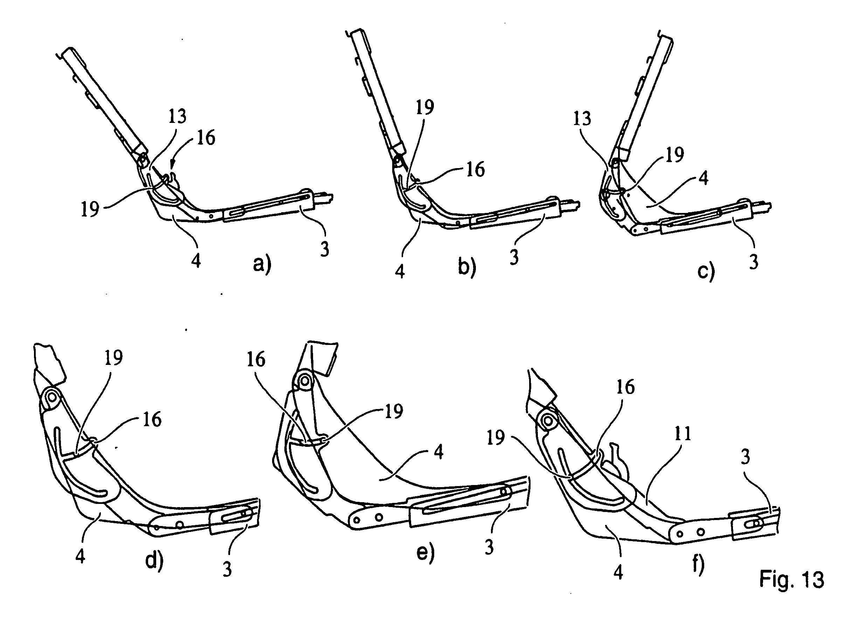

Figuren 13a bis 13c zeigen das Verschwenken der Rückenlehne 6 im Bereich der Gebrauchsposition und die dabei sich verändernde Stellung des Bolzens 19 innerhalb der Kulisse 16. In Figur 13a ist die hinterste Stellung der Rückenlehne 6 dargestellt. In dieser Stellung befindet sich der Bolzen am Anfang der Ausnehmung 16. Wird dann die Lehne im Uhrzeigersinn verschwenkt, wandert der Bolzen 19 nach rechts (Figur 13b), bis er im Bereich der Easy-Entry-Stellung seinen Endanschlag erreicht hat (Figur 13c). Da der Bolzen 19 an dem Gelenkhebel 4 angeordnet ist, bewegt dieser sich ebenfalls, wie in den Figuren13 a - c dargestellt. Das Gelenkstück 11 hingegen bleibt ortsfest.

Die Figuren 13d bis 13f zeigen den oben aufgeführten Zusammenhang noch einmal im Detail, wobei Figur 13f die am weitesten nach hinten geklappte Stellung der Rücklehne, Figur 13e die Easy- Entry-Stellung der Rückenlehne und Figur 13d eine Zwischenstellung der Rückenlehne zwischen den beiden Stellungen gemäß Figuren 13 e und 13f darstellt.

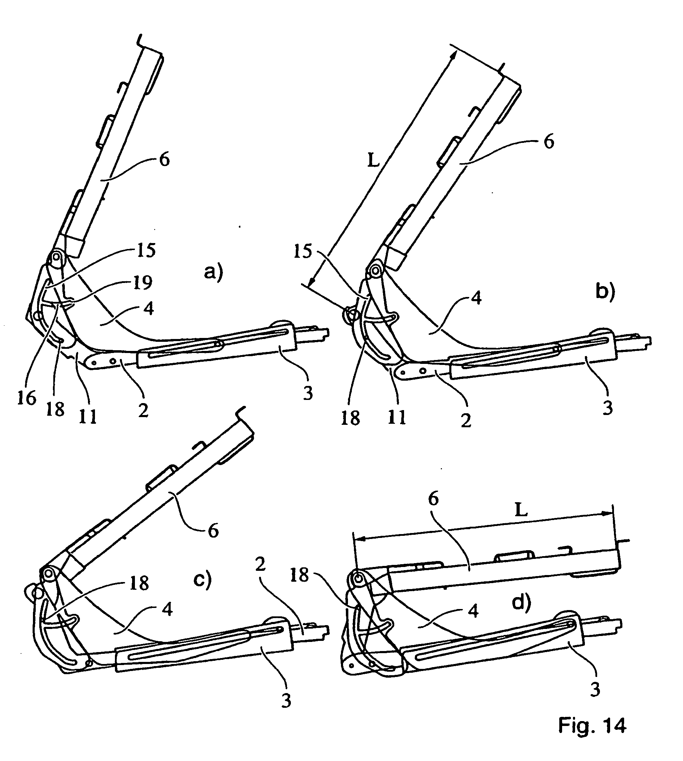

Figur 14 zeigt die Überführung der Rückenlehne von der Easy-Entry-Position in die Verstauposition. Figur 14a zeigt die Easy-Entry-Stellung, während Figur 14d die Verstaustellung darstellt. Während der gesamten Überführung von der Easy-Entry- in die Verstauposition bleibt der Bolzen 19 in seiner rechten Endposition, während der Bolzen 18 von seiner untersten Stellung Figur 14a in seine oberste Stellung Figur 14d wandert. Außerdem wird der Gelenkhebel 4 während dieses Vorgangs von einer hinteren Stellung Figur 14a in seine vorderste Stellung Figur 14d entlang der Führung 3 verschoben. Bedingt durch die Kulisse 13 wird während des gesamten Verschwenkvorganges gleichzeitig die Länge L der Rückenlehne verkürzt. D.h. die Rückenlehne wird in die Führung 15 gezogen. Dadurch verteilt sich die für das Überführen der Rückenlehne von der Easy-Entry- in die Verstauposition benötigte Kraft gleichmäßig über den gesamten Vorgang.

Das Rücküberführen der Rückenlehne in die Gebrauchsstellung kann durch eine Feder, beispielsweise durch eine Gasdruckfeder, unterstützt werden. Der Fahrzeugsitz gemäß 14d kann unter dem Sitzteil eines benachbarten Sitzes verstaut werden.

### Bezugszeichenliste

- **1**: Fahrzeugsitz
- **2**: Sitzteil
- **3**: Gleitschienen
- **4**: Gelenkhebel
- **5**: Führung, Schiebeführung
- **6**: Rückenlehne
- **7**: Drehachse (zwischen Schiebeführung 5 und Gelenkstück 11)
- **8**: Endanschlag
- **9**: Schenkelfeder
- **10**: Drehachse (zwischen Gelenkstück 11 und Sitzteil 2)
- **11**: Gelenkstück
- **12**: Drehachse (zwischen Rückenlehne 6 und Gelenkhebel 4)
- **13**: Kulissenführung
- **14**: Befestigung
- **15**: erste Ausnehmung, erstes Langloch
- **16**: zweite Ausnehmung, zweites Langloch
- **17**: Aufhängung der Schiebeführung
- **18**: Vorsprung an dem Gelenkstück 11, Bolzen
- **19**: Vorsprung an dem Gelenkhebel 4, Bolzen
- **L**: Länge der Rückenlehne

## Patentansprüche

1. Fahrzeugsitz (1) mit einem Sitzteil (2) und einer Rückenlehne (6), deren Neigung relativ zu dem Sitzteil (2) verstellbar ist und die von einer Gebrauchs- in eine Verstauposition und umgekehrt überführbar ist, wobei sich beim Überführen die Länge (L) der Rückenlehne verändert, **dadurch gekennzeichnet, dass** die Rückenlehne an mindestens einem Gelenkhebel (4) drehbar gelagert ist, der verschieblich an dem Sitzteil (2) angeordnet ist.

2. Fahrzeugsitz nach Anspruch 1, **dadurch gekennzeichnet, dass** die Rückenlehne an zwei Gelenkhebeln (4) drehbar gelagert ist, die verschieblich an dem Sitzteil (2) angeordnet sind.

3. Fahrzeugsitz nach einem der voranstehenden Ansprüche, **dadurch gekennzeichnet, dass** die Rückenlehne (6) eine Führung (5) aufweist, entlang derer sie reversibel verschiebbar ist, wodurch sich ihre Länge reversibel verändert.

4. Fahrzeugsitz nach Anspruch 3, **dadurch gekennzeichnet, dass** die Führung (5) federbelastet ist.

5. Fahrzeugsitz nach Anspruch 3, **dadurch gekennzeichnet, dass** er mindestens ein, vorzugsweise zwei Gelenkstücke (11) aufweist, das/die mit einem Ende an dem Sitzteil (2) und mit dem anderen Ende an der Führung (5) jeweils drehbar angeordnet ist/sind.

6. Fahrzeugsitz nach einem der Ansprüche 3 - 5, **dadurch gekennzeichnet, dass** an dem Gelenkstück (11) ein Endanschlag (8) für die Drehung der Führung (5) angeordnet ist.

7. Fahrzeugsitz nach einem der Ansprüche 5 oder 6, **dadurch gekennzeichnet, dass** zwischen dem Sitzteil (2) und dem Gelenkstück (11) eine Feder (9) angeordnet ist.

8. Fahrzeugsitz nach einem der voranstehenden Ansprüche **dadurch gekennzeichnet, dass** am Sitzteil (2) eine Führung (3) für den Gelenkhebel (4) angeordnet ist.

9. Fahrzeugsitz nach einem der voranstehenden Ansprüche, **dadurch gekennzeichnet, dass** er eine Kulissenführung (13) aufweist.

10. Fahrzeugsitz nach Anspruch 9, **dadurch gekennzeichnet, dass** die Kulissenführung (13) mit einer Befestigung (14) an der Rückenlehne (6) angeordnet ist.

11. Fahrzeugsitz nach Anspruch 10, **dadurch gekennzeichnet, dass** die Kulissenführung (13) eine erste und/oder eine zweite Ausnehmung (15, 16) aufweist

12. Fahrzeugsitz nach Anspruch 11, **dadurch gekennzeichnet, dass** an dem Gelenkhebel (4) ein Vorsprung (19) angeordnet ist, der mit der zweiten Ausnehmung (16) zusammenwirkt.

13. Fahrzeugsitz nach einem der Ansprüche 11 oder 12, **dadurch gekennzeichnet, dass** an dem Gelenkstück (11) ein Vorsprung (18) angeordnet ist, der mit der ersten Ausnehmung (15) zusammenwirkt.

14. Fahrzeugsitz nach einem der voranstehenden Ansprüche, **dadurch gekennzeichnet, dass** der Gelenkhebel (4) bananenförmig gestaltet ist.

15. Fahrzeugsitz nach einem der Ansprüche 5-14, **dadurch gekennzeichnet, dass** der Gelenkhebel (4) das Gelenkstück (11) zu jedem Zeitpunkt im Wesentlichen überdeckt.

16. Fahrzeugsitz nach einem der voranstehenden Ansprüche, **dadurch gekennzeichnet, dass** er Teil einer Sitzreihe ist.

17. Fahrzeugsitz nach Anspruch 16, **dadurch gekennzeichnet, dass** die Sitzreihe mindestens einen weiteren Sitz aufweist.

18. Fahrzeugsitz nach Anspruch 16 oder 17, **dadurch gekennzeichnet, dass** die Rückenlehne (6) um eine Drehachse (7) in ihrer Neigung verstellbar ist, die der Drehachse der Rückenlehne des weiteren Sitzes entspricht.

19. Fahrzeugsitz nach einem der Ansprüche 16 - 18, **dadurch gekennzeichnet, dass** er in der Gebrauchsposition mit dem anderen Sitz verriegelbar ist.

20. Fahrzeugsitz nach einem der Ansprüche 16 - 19, **dadurch gekennzeichnet, dass** er in der Verstauposition unter dem Sitzteil des weiteren Sitzes verstaubar ist.

## Claims

1. Vehicle seat (1) having a seat part (2) and a backrest (6), the inclination of which relative to the seat part (2) is adjustable and which may be transferred from an in-use position into a stowed position and vice versa, wherein the length (L) of the backrest changes upon such transfer, **characterized in that** the backrest is mounted rotatably on at least one articulated lever (4) which is arranged displaceably on the seat part (2).

2. Vehicle seat according to Claim 1, **characterized in that** the backrest is mounted rotatably on two articulated levers (4) which are arranged displaceably on the seat part (2).

3. Vehicle seat according to one of the preceding claims, **characterized in that** the backrest (6) comprises a guide (5), along which it may be reversibly displaced, so changing its length reversibly.

4. Vehicle seat according to Claim 3, **characterized in that** the guide (5) is spring loaded.

5. Vehicle seat according to Claim 3, **characterized in that** it comprises at least one, preferably two, articulated members (11), which is/are each arranged rotatably with one end on the seat part (2) and with the other end on the guide (5).

6. Vehicle seat according to one of Claims 3-5, **characterized in that** an end stop (8) for the rotation of the guide (5) is arranged on the articulated member (11).

7. Vehicle seat according to one of Claims 5 or 6, **characterized in that** a spring (9) is arranged between the seat part (2) and the articulated member (11).

8. Vehicle seat according to one of the preceding claims, **characterized in that** a guide (3) for the articulated lever (4) is arranged on the seat part (2).

9. Vehicle seat according to one of the preceding claims, **characterized in that** it comprises a slotted guide (13).

10. Vehicle seat according to Claim 9, **characterized in that** the slotted guide (13) is arranged with a fixing means (14) on the backrest (6).

11. Vehicle seat according to Claim 10, **characterized in that** the slotted guide (13) comprises a first and/or a second opening (15, 16).

12. Vehicle seat according to Claim 11, **characterized in that** a projection (19) is arranged on the articulated lever (4), which projection cooperates with the second opening (16).

13. Vehicle seat according to one of Claims 11 or 12, **characterized in that** a projection (18) is arranged on the articulated member (11), which projection cooperates with the first opening (15).

14. Vehicle seat according to one of the preceding claims, **characterized in that** the articulated lever (4) is banana-shaped.

15. Vehicle seat according to one of Claims 5-14, **characterized in that** the articulated lever (4) substantially covers the articulated member (11) at all times.

16. Vehicle seat according to one of the preceding claims, **characterized in that** it is part of a row of seats.

17. Vehicle seat according to Claim 16, **characterized in that** the row of seats comprises at least one further seat.

18. Vehicle seat according to Claim 16 or 17, **characterized in that** the backrest (6) is adjustable in inclination about an axis of rotation (7) which corresponds to the axis of rotation of the backrest of the further seat.

19. Vehicle seat according to one of Claims 16-18, **characterized in that** it may be locked to the other seat in the in-use position.

20. Vehicle seat according to one of Claims 16-19, **characterized in that** in the stowage position it may be stowed under the seat part of the further seat.

## Revendications

1. Siège de véhicule (1) équipé d'une partie d'assise (2) et d'un dossier (6), dont l'inclinaison par rapport à la partie d'assise (2) est réglage et pouvant être guidé d'une position d'utilisation dans une position rangée et inversement, la longueur (L) du dossier pouvant varier pendant son transfert, **caractérisé en ce que** le dossier est disposé de façon pivotante au niveau d'au moins un levier articulé (4) lui-même disposé de façon coulissante au niveau de la partie d'assise (2).

2. Siège de véhicule selon la revendication 1, **caractérisé en ce que** le dossier peut être disposé de façon pivotante au niveau de deux leviers articulés (4) eux-mêmes disposés de façon coulissante au niveau de la partie d'assise (2).

3. Siège de véhicule selon l'une quelconque des revendications précédentes, **caractérisé en ce que** le dossier (6) comporte un guide (5) le long duquel il peut être coulissé de façon réversible, permettant ainsi de faire varier sa longueur de façon réversible.

4. Siège de véhicule selon la revendication 3, **caractérisé en ce que** le guide (5) est chargé par ressort.

5. Siège de véhicule selon la revendication 3, **caractérisé en ce qu'**il comporte au moins un, de préférence deux, éléments articulés (11) disposés de façon à pouvoir tourner respectivement avec une extrémité au niveau de la partie d'assise (2) et avec l'autre extrémité au niveau du guide (5).

6. Siège de véhicule selon l'une quelconque des revendications 3 à 5, **caractérisé en ce qu'**une butée d'extrémité (8) est disposée au niveau de l'élément articulé (11) pour le pivotement du guide (5).

7. Siège de véhicule selon l'une quelconque des revendications 5 ou 6, **caractérisé en ce qu'**un ressort (9) est disposé entre la partie d'assise (2) et l'élément articulé (11).

8. Siège de véhicule selon l'une quelconque des revendications précédentes, **caractérisé en ce qu'**un guide (3) est disposé au niveau de la partie d'assise (2) pour le levier articulé (4).

9. Siège de véhicule selon l'une quelconque des revendications précédentes, **caractérisé en ce qu'**il comporte un guide à coulisse (13).

10. Siège de véhicule selon la revendication 9, **caractérisé en ce que** le guide à coulisse (13) pourvu d'une fixation (14) est disposé au niveau du dossier (6).

11. Siège de véhicule selon la revendication 10, **caractérisé en ce que** le guide à coulisse (13) comporte un premier et/ou un deuxième évidement (15, 16).

12. Siège de véhicule selon la revendication 11, **caractérisé en ce qu'**une saillie (19) entrant en interaction avec le deuxième évidement (16) est disposée au niveau du levier articulé (4).

13. Siège de véhicule selon l'une quelconque des revendications 11 ou 12, **caractérisé en ce qu'**une saillie (18) entrant en interaction avec le premier évidement (15) est disposée au niveau de l'élément articulé (11).

14. Siège de véhicule selon l'une quelconque des revendications précédentes, **caractérisé en ce que** le levier articulé (4) prend une forme de banane.

15. Siège de véhicule selon l'une quelconque des revendications 5 à 14, **caractérisé en ce que** le levier articulé (4) recouvre à tout instant pour l'essentiel l'élément articulé (11).

16. Siège de véhicule selon l'une quelconque des revendications précédentes, **caractérisé en ce qu'**il fait partie d'une banquette de siège.

17. Siège de véhicule selon la revendication 16, **caractérisé en ce que** la banquette de siège comporte au moins un siège supplémentaire.

18. Siège de véhicule selon la revendication 16 ou 17, **caractérisé en ce que** le dossier (6) peut être réglé dans son inclinaison autour d'un axe de rotation (7), ledit axe correspondant à l'axe de rotation de l'autre siège.

19. Siège de véhicule selon l'une quelconque des revendications 16 à 18, **caractérisé en ce qu'**il peut être verrouillé à l'autre siège dans la position d'utilisation.

20. Siège de véhicule selon l'une quelconque des revendications 16 à 19, **caractérisé en ce que** dans la position rangée, il peut être rangé en dessous de la partie d'assise de l'autre siège.
